# EUROPEAN PATENT APPLICATION

(11) **EP 2 736 261 A1**
(43) Date of publication of application: **28.05.2014**
(21) Application number: 12306463.6
(22) Date of filing: 27.11.2012
(51) Int. Cl.: H04N 17/00

(54) **Method For Assessing The Quality Of A Video Stream**

(71) Applicant: Alcatel Lucent, 75007 Paris (FR)
(72) Inventor: Alberi-Morel, Marie Line, 94230 Cachan (FR); Kerboeuf, Sylvaine, 91140 Villebon-sur-Yvette (FR)
(74) Representative: ALU Antw Patent Attorneys

(57) **Abstract**

Method for assessing the quality of a first video stream (V_{RX}), said method comprising:
- determining a second video stream (V_{Ref}) by applying at least one of upscaling and video quality enhancement techniques to the first video stream (V_{RX}), and
- determining at least one quality score (QS) from the first video stream (V_{RX}) and the second video stream (V_{Ref}).

## Description

### FIELD OF THE INVENTION

The present invention relates to a method for assessing the quality of a video stream.

### BACKGROUND

Known video quality assessment techniques are based on a full reference video stream, implying that, at the quality assessment equipment, both the decoded received video signal and the original source video signal are needed to assess the quality degradation in the decoded received video signal. However, the source video signal is generally not available in real deployed networks and hence, such methods are restricted to laboratory tests.

Other techniques, referred to as reduced reference methods, make use of a stream of features extracted from the original source video signal, and assess the quality degradation of the decoded received video signal by comparing the stream of features with the equivalent stream of features extracted from the decoded received video signal. The stream of feature may be sent as overhead with the video signal or in an ancillary channel. The reliability of these reduced reference methods depends on the amount of features that are extracted, i.e., the larger (in bit rate) the stream of features is the better the reliability. In the current state of the art the bit rate associated with the stream of features still needs to be considerable compared to the bit rate of the video signal itself such that these reduced reference methods suffer from the need of high transmission bandwidth.

Other existing methods, referred to as no-reference methods, only rely on the received information (either the stream of packets or the decoded video signal) to assess the degradation caused by encoding and transmission, and hence such methods do not need to know the original signal. However, the results provided by no-reference methods are generally less accurate than with full reference or reduced reference method.

### SUMMARY

It is thus an object of embodiments of the present invention to propose an improved method for assessing the quality of a video stream, which does not show the inherent shortcomings of the prior art methods.

According to embodiments of the present invention this object is achieved by a method for assessing the quality of a first video stream, said method comprising:
- determining a second video stream by applying at least one of upscaling and video quality enhancement techniques to the first video stream, and
- determining at least one quality score from the first video stream and the second video stream.

Correspondingly, embodiments of the invention relates to a video quality assessment system for assessing the quality of a first video stream, comprising:
- a video reference prediction module for determining a second video stream by applying at least one of upscaling and video quality enhancement techniques to the first video stream, and
- a video quality assessment module for determining at least one quality score from the first video stream (V_{RX}) and the second video stream.

In this way, the second video stream may be used as a reference for assessing the quality of the first video stream, even when a source video stream is not available. This allows determining the quality score by using for example a full-reference method, a reduced-reference method or a pseudo no-reference method. In an embodiment, the method comprises:
- receiving the first video stream as the result of the transmission of a third video stream in a network,
   wherein the spatial resolution, the frame rate and a quality format of the second video stream correspond to the spatial resolution, the frame rate and a quality format of a highest available format of the third video stream, respectively.

The upscaling may comprise a learning example-based Super-Resolution technique. For example, applying upscaling to the first video stream may comprise determining a frame of the second video stream from a frame of first video stream and a dictionary including pairs of low-resolution and high-resolution patches, wherein the spatial resolution of the frame of the second video stream is higher than the spatial resolution of the frame of first video stream.

In an embodiment, determining the second video stream comprises:
- receiving encoded packets of the first video stream,
- decoding error-free packets of the first video stream, and
- determining a frame of the second video stream in function of the decoded error-free packets.

In this case, the quality degradation due to adaptive multiple bitrate streaming may be assessed.

In another embodiment, determining the second video stream comprises:
- receiving encoded packets of the first video stream,
- decoding packets of the first video stream, and
- determining a frame sequence of the second video stream in function of the decoded packets.

In this case, the quality degradation due to adaptive multiple bitrate streaming and to impairment in the transmission chain (e.g. packet loss) may be assessed.

The quality score may be determined by a full-reference method, wherein the second video stream is used as reference.

In another embodiment, determining the quality score comprises:
- determining a first set of features from the first video stream,
- determining a second set of features from the second video stream,
- determining the quality score in function of the first set of features and the second set of features.

The quality score may be determined by a pseudo no-reference method, wherein the quality score is determined in function of additional information derived from the second video stream.

In an embodiment, determining the second video stream and determining the quality score is performed by a video quality assessment apparatus in an operator network.

Embodiments of the inventions also relates to a computer program comprising instructions adapted to perform the method for assessing the quality of a first video stream according to an embodiment of the invention when said program is executed by a computer.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 is a schematic of a system wherein a method for assessing the quality of a video stream according to an embodiment of the invention may be implemented,
Figures 2, 3 and 4 are more detailed views of the video reference prediction module and the video quality assessment module of the system of Figure 1, according to various embodiments,
Figure 5 is a more detailed view of the video reference prediction module of the system of Figure 1, according to an embodiment, and
Figure 6 is another schematic of the system of Figure 1, which shows a plurality of user terminals.

### DESCRIPTION OF EMBODIMENTS

It is to be remarked that the functions of the various elements shown in the figures, including any functional blocks labeled as "module" or "unit", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

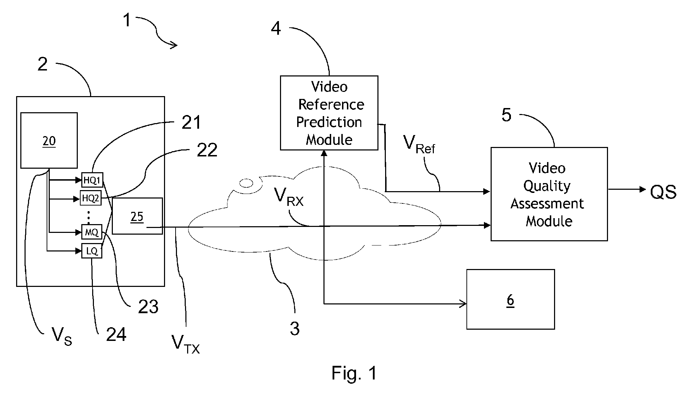

**Figure 1** is a schematic of a system 1 wherein a method for assessing the quality of a video stream according to an embodiment of the invention may be implemented. The system 1 comprises a multimedia server 2, a network 3, a video reference prediction module 4, a video quality assessment module 5 and at least one user terminal 6.

The multimedia server 2 sends a video stream V_{TX} to the terminal 6, through the network 3. The transmitted video stream V_{TX} is encoded and encapsulated in the network OSI layers. The received video stream V_{RX} is displayed on the user terminal 6.

In an embodiment, the video stream V_{TX} may be an encoded video stream of predetermined bit rate.

In another embodiment, which is shown in Figure 1, the multimedia server 2 uses an adaptive bit rate streaming technique. In that case, the multimedia server 2 comprises a video encoder 20 for determining a source encoded video stream V_{S}, and a plurality of modules 21, 22, 23, 24 for determining video streams of multiple bit rates from the source encoded video stream V_{S}. For example, module 21 provides a highest quality stream HQ1, module 22 provides a high quality stream HQ2 of lower bit rate than stream HQ1, module 23 provides a medium quality stream MQ of lower bit rate than stream HQ2, and module 24 provides a low quality stream LQ of lower bit rate than stream MQ. The multimedia server 2 also comprises a streaming server 25 for selecting one of the streams HQ1, HQ2, MQ and LQ and transmitting the selected stream V_{TX} to the terminal 6, through the network 3.

In the network 3, the received video stream V_{RX} may differ from transmitted video stream V_{TX}, for example due to packet loss, delay... Moreover, in the case of adaptive bit rate streaming, the quality format of the transmitted video stream V_{TX} may differ from the highest available quality format of HQ1 due to bit rate switching. In other words, the received video stream V_{RX} available in the network and displayed on the user terminal 6 may be distorted, that is quality may be reduced.

The video reference prediction module 4 and the video quality assessment module 5 aim at assessing the quality of the received video stream V_{RX}, which is transmitted to the user terminal 6. The video reference prediction module 4 and the video quality assessment module 5 may be located in an operator's network (which is part of network 3), for example in a video quality assessment apparatus. In a variant, the video reference prediction module 4 and the video quality assessment module 5 may be located in the user terminal 6.

The video reference prediction module 4 receives the received video stream V_{RX} and determines a reference video signal V_{Ref} by applying upscaling and/or video quality enhancement techniques to the received video stream V_{RX}. Here, "upscaling" means any technique used to increase the resolution of a video stream in the spatial domain (resolution or pixel number), and/or in the time domain (i.e. frame rate). Upscaling is sometimes referred to as reconstruction or Super-Resolution techniques. Also, "video quality enhancement techniques" means any technique used to enhance the quality format of a video (linked to the number of bit per pixel).

The video reference prediction module 4 determines the reference video signal V_{Ref} of the same spatial resolution, frame rate and quality format as the highest available quality of the video stream V_{TX}. For example, in case of adaptive bitrate streaming, the reference video signal V_{Ref} has the same spatial resolution, frame rate and quality format as the video stream HQ1. Correspondingly, in case of a video stream V_{TX} of fixed bitrate, the reference video signal V_{Ref} has the same spatial resolution, frame rate and quality format as the video stream V_{TX}

Information about the spatial resolution, frame rate and quality format of the video stream HQ1 (or of the video stream V_{TX} if it is fixed) may be included as meta-data in the received video stream V_{RX}. In another example, this information on HQ1 (or on V_{TX} if it is fixed) is constant and known to the video reference prediction module 4 as predetermined data. According to another example, the multimedia server 2 sends a message (not shown) to the video reference prediction module 4 including this information.

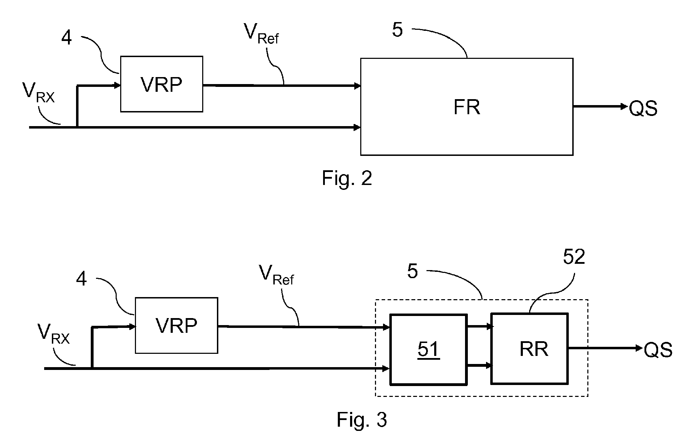

The video quality assessment module 5 determines a quality score QS from the reference video signal V_{Ref} and the received encoded video stream V_{RX}. Indeed, the system 1 makes it possible to assess the quality of the received video stream V_{RX} by using a reference video signal V_{Ref}, although none of the source encoded video stream V_{S} and the transmitted video stream V_{TX} are available in the network 3 for the video quality assessment apparatus. This make it possible to determine the quality score QS by using a full-reference (FR) method, a reduced-reference (RR) method or a no-reference (NR) method designed to take advantages of a reference signal, as described hereafter with reference to Figures 2 to 4.

In an embodiment of the invention, the quality score QS may be a mean opinion score, hereafter abbreviated by MOS, being a number indicating the quality associated with a video stream. In this embodiment, the video quality assessment module 5 assesses the quality of a video by predicting the Mean Opinion Score, abbreviated by MOS, an audience would give when appraising the video. The MOS associated with a video is the average (i.e., mean) of all individual scores that the members of the audience give. Subjective tests (where audiences appraise videos) are cumbersome and time-consuming. Therefore objective video quality models, which calculate a prediction for the MOS, are developed. They are faster and easier to use than subjective tests, but in order to be valuable their predictions should correlate well with these subjective tests.

In the embodiment of **Figure 2****,** the video quality assessment module 5 determines the quality score QS by comparing the reference video signal V_{Ref} with the received video stream V_{RX} according to a full-reference method. However, instead of using the source encoded video stream V_{S}, which is not available, as a reference, the reference video signal V_{Ref} provided by the video reference prediction module 4 is used as a reference by the quality assessment module 5. Here, a full-reference method known to the skilled person may be used. For example, a method based on the computation of a Peak Signal-to-Noise Ratio (PSNR) or a Mean Squared Error (MSE) is suitable. Such methods have the advantages of being computationally light and simple to implement.

In the embodiment of **Figure 3****,** the video quality assessment module 5 comprises a features extraction module 51 and a reduced-reference quality assessment module 52. The features extraction module 51 extracts a predetermined set of features from each of the reference video signal V_{Ref} and the received video stream V_{RX}. The reduced-reference quality assessment module 52 determines the quality score QS by comparing the set of features extracted from the reference video signal V_{Ref} with set of features extracted from the received video stream V_{RX'} according to a reduced-reference method. Here, a reduced-reference method and a corresponding set of extracted features known to the skilled person may be used. However, instead of transmitting a stream of feature extracted from the source encoded video stream V_{S}, features are extracted from the received video stream V_{RX}. This makes it possible to use a reduced-reference method without the need to transmit a stream of features from the multimedia server 2 to the video quality assessment module 5.

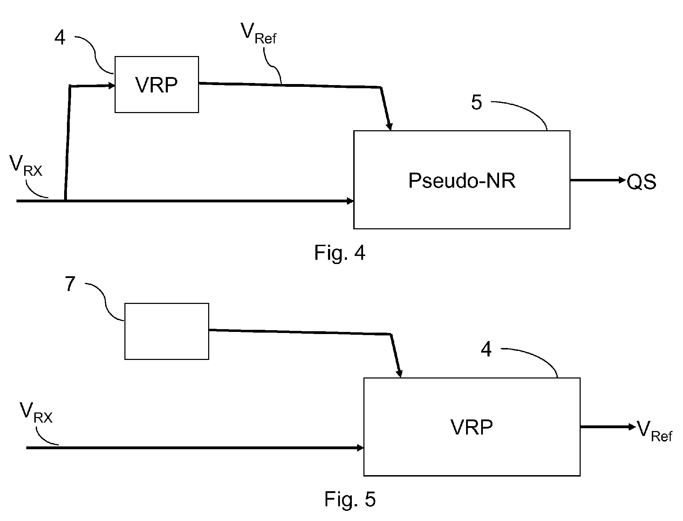

In the embodiment of **Figure 4****,** the video quality assessment module 5 determines the quality score QS by using a pseudo no-reference method. Here, "pseudo no-reference method" means a method similar to a no-reference method, for example a no-reference method based on packet layer data and/or bit stream layer data known to the skilled person, but which uses additional information derived from the reference video signal V_{Ref}. The use of such additional information may improve the accuracy of the quality score QS.

In an embodiment, the video reference prediction module 4 processes the received video stream V_{RX} in the following manner:
1) Reception of the packets of the received video stream V_{RX}.
2) Decapsulation of all the network OSI layers.
3) Depending on the type of degradation the mobile operator wants to evaluate:
   a. Evaluation of degradation due to adaptive multiple bitrate streaming
      i. Decoding of only error-free and compressed video packets to recover uncompressed decoded error-free video frames
   b. Evaluation of both types of degradation : packet losses in the multimedia transmission chain and distortion due to adaptive multiple bitrate streaming
      i. When applicative forward error correction (hereafter FEC) is used by the multimedia server 2, apply FEC decoding to correct the erroneous compressed video packets
      ii. Decoding of compressed video packets to recover uncompressed decoded video sequence frames
      iii. In case applicative FEC is not used or when there is some residual errors, use erroneous pixel correction using video post-processing like e.g. inpainting technique
4) Determination of the reference video signal V_{Ref} by applying upscaling and/or video quality enhancement techniques to the decoded video encoded in lower spatial resolution, and/or in lower frame rate and/or in lower quality format than the highest format available in the multimedia server 2 (that is, of the source encoded video stream V_{S}).
5) Transmitting the determined reference video signal V_{Ref} to the video quality assessment module 5.

The upscaling and/or video quality enhancement techniques used at point 4) above may be any technique known to the skilled person such as a reconstruction-based approach, an interpolation-based approach or an example-based approach, or a combination thereof. In an embodiment wherein the degradation puts in the spatial resolution, the technique described in M. Bevilacqua, A. Roumy, C. Guillemot, M-L. Alberi Morel, "Low-Complexity Single-Image Super-Resolution based on Nonnegative Neighbor Embedding", British Machine Vision Conference (BMVC), 2012 may be used. This technique is illustrated in **Figure 5****,** wherein the video reference prediction module 4 is connected to (or includes) a dictionary 7 which contains pairs of Low Resolution patches (sub-windows of High Resolution training images converted into Low Resolution version) and their corresponding High Resolution counterparts. To create high-resolution frames with fine details, this single-image example-based Super-Resolution method exploits information that comes from the dictionary 7. The fine High Resolution details are learned at a low-resolution (via machine learning approach), and the learned relationships allow the prediction of fine details of high-resolution image. For this, the algorithm derives a linear combination of a certain number of selected High Resolution neighbors taken from the dictionary 7. The HR image is thus reconstructed patch by patch from the preceding selected neighbors embedding. This method exhibits interesting computational properties (e.g. single-step magnification, linear combinations, processing highly parallelizable) which leads to fast and low complexity embedded algorithms.

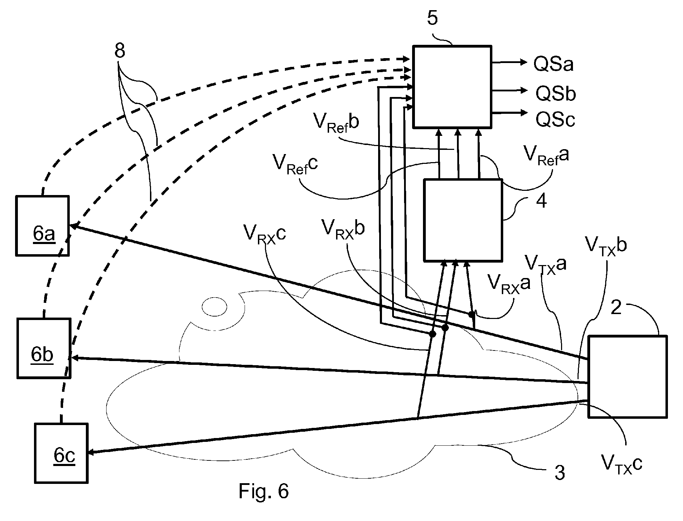

Although Figure 1 shows only one user terminal 6, the system 1 can include a plurality of user terminals, as illustrated in **Figure 6****.** In Figure 6, for each transmitted video steam V_{TX}a, V_{TX}b, V_{TX}c... transmitted to a respective terminal 6a, 6b, 6c... the video reference prediction module 4 determines a reference video signal V_{Ref}a, V_{Ref}b, V_{Ref}c...from the received video stream V_{RX}a, V_{RX}b, V_{RX}c... The video quality assessment module 5 determines respective quality scores QSa, QSb, QSc... from the received video stream V_{RX}a, V_{RX}b, V_{RX}c...and the determined reference video signal V_{Ref}a, V_{Ref}b, V_{Ref}c... In an embodiment, the video quality assessment module 5 also takes into account client feedback from the terminals 6, as illustrated by arrows 8.

Embodiments of the method can be performed by means of dedicated hardware and/of software or any combination of both.

While the principles of the invention have been described above in connection with specific apparatus, it is to be clearly understood that this description is made only by way of example and not as a limitation on the scope of the invention, as defined in the appended claims.

## Claims

1. Method for assessing the quality of a first video stream (V_{RX}), said method comprising:
- determining a second video stream (V_{Ref}) by applying at least one of upscaling and video quality enhancement techniques to the first video stream (V_{RX}), and
- determining at least one quality score (QS) from the first video stream (V_{RX}) and the second video stream (V_{Ref}).

2. Method according to claim 1, comprising:
- receiving the first video stream (V_{RX}) as the result of the transmission of a third video stream (V_{TX}) in a network (3),
wherein the spatial resolution, the frame rate and a quality format of the second video stream (V_{Ref}) correspond to the spatial resolution, the frame rate and a quality format of a highest available format (HQ1, V_{TX}) of the third video stream (V_{TX}), respectively.

3. Method according to one of claims 1 and 2, wherein applying upscaling to the first video stream (V_{RX}) comprises determining a frame of the second video stream (V_{Ref}) from a frame of first video stream (V_{RX}) and a dictionary (7) including pairs of low-resolution and high-resolution patches, wherein the spatial resolution of the frame of the second video stream (V_{Ref}) is higher than the spatial resolution of the frame of first video stream (V_{RX}).

4. Method according to one of claims 1 to 3, wherein determining the second video stream (V_{Ref}) comprises:
- receiving encoded packets of the first video stream (V_{RX}),
- decoding error-free packets of the first video stream (V_{RX}), and
- determining a frame of the second video stream (V_{Ref}) in function of the decoded error-free packets.

5. Method according to one of claims 1 to 3, wherein determining the second video stream (V_{Ref}) comprises:
- receiving encoded packets of the first video stream (V_{RX}),
- decoding packets of the first video stream (V_{RX}), and
- determining a frame sequence of the second video stream (V_{Ref}) in function of the decoded packets.

6. Method according to one of claims 1 to 5, wherein the quality score (QS) is determined by a full-reference method, wherein the second video stream (V_{Ref}) is used as reference.

7. Method according to one of claims 1 to 5, wherein determining the quality score (QS) comprises:
- determining a first set of features from the first video stream (V_{RX}),
- determining a second set of features from the second video stream (V_{Ref}),
- determining the quality score (QS) in function of the first set of features and the second set of features.

8. Method according to one of claims 1 to 5, wherein the quality score (QS) is determined by a pseudo no-reference method, wherein the quality score (QS) is determined in function of additional information derived from the second video stream (V_{Ref}).

9. Method according to one of claims 1 to 9, wherein determining the second video stream (V_{Ref}) and determining the quality score (QS) is performed by a video quality assessment apparatus in an operator network.

10. A computer program including instructions adapted to perform the method of any of the claims 1 to 8 when said program is executed by a computer.

11. Video quality assessment system for assessing the quality of a first video stream (V_{RX}), comprising:
- a video reference prediction module (4) for determining a second video stream (V_{Ref}) by applying at least one of upscaling and video quality enhancement techniques to the first video stream (V_{RX}), and
- a video quality assessment module (5) for determining at least one quality score (QS) from the first video stream (V_{RX}) and the second video stream (V_{Ref}).
